# EUROPÄISCHE PATENTSCHRIFT

(11) **EP 3 378 212 B1**
(45) Veröffentlichungstag und Bekanntmachung des Hinweises auf die Patenterteilung: **27.03.2019**
(21) Anmeldenummer: 16798747.8
(22) Anmeldetag: 22.11.2016
(51) Int. Cl.: H04L 29/06, H04L 12/40

(54) **VERFAHREN ZUM BETREIBEN EINES KOMMUNIKATIONSNETZWERKES, STEUERVORRICHTUNG UND DATENVERARBEITUNGSVORRICHTUNG**
METHOD FOR OPERATING A COMMUNICATION NETWORK, CONTROLLER, AND DATA PROCESSING DEVICE
PROCÉDÉ POUR FAIRE FONCTIONNER UN RÉSEAU DE COMMUNICATION, DISPOSITIF DE COMMANDE ET DISPOSITIF DE TRAITEMENT DE DONNÉES

(30) Priorität: 23.11.2015 DE 102015120242
(43) Veröffentlichungstag der Anmeldung: 26.09.2018
(73) Patentinhaber: Beckhoff Automation GmbH, 33415 Verl (DE)
(72) Erfinder: BUNTE, Thorsten, 33335 Gütersloh (DE); BÜTTNER, Holger, 12157 Berlin (DE); JANSSEN, Dirk, 33415 Verl (DE); RETTIG, Thomas, 33378 Rheda-Wiedenbrück (DE); BECKHOFF, Hans, 33415 Verl (DE); VONNAHME, Erik, 33154 Salzkotten (DE)
(74) Vertreter: Patentanwaltskanzlei WILHELM & BECK
(86) Internationale Anmeldenummer: PCT/EP2016/078403
(87) Internationale Veröffentlichungsnummer: WO 2017/089336

(56) Entgegenhaltungen:
- DE-A1- 3 438 791
- US-A1- 2005 259 609
- ADVANCED TELEVISION SYSTEMS COMMITTEE: "ATSC Standard for Transmitter Synchronization, A/110:2011", ATSC STANDARDS DOCUMENTS, 8. April 2011 (2011-04-08), XP017846607, Washington, D.C.
- Anonymous: "Feldbus - Wikipedia", , 10. November 2015 (2015-11-10), XP055340712, Gefunden im Internet: URL:https://de.wikipedia.org/w/index.php?t itle=Feldbus&oldid=147914571 [gefunden am 2017-01-31]

## Beschreibung

Die Erfindung betrifft ein Verfahren zum Betreiben eines Kommunikationsnetzwerkes, ein Kommunikationsnetzwerk, eine Steuervorrichtung zur Verwendung als ein erster Teilnehmer und eine Datenverarbeitungsvorrichtung zur Verwendung als ein zweiter Teilnehmer.

Diese Patentanmeldung beansprucht die Priorität der deutschen Patentanmeldung DE 10 2015 120 242. 5.

Ein Kommunikationsnetzwerk umfasst mehrere (d.h. mindestens zwei) Teilnehmer, die untereinander über geeignete Nachrichtenkanäle in Verbindung stehen. Die Nachrichtenkanäle können als drahtlose wie drahtgebundene Kanäle ausgelegt sein. Informationen können dabei in dem Kommunikationsnetzwerk von einem Teilnehmer an einen anderen Teilnehmer in Form von diskreten Datenpaketen (Telegrammen) übertragen werden.

Ein Durchlaufnetzwerk ist ein Netzwerk, in dem ein die Teilnehmer durchlaufender Datenpfad definiert ist, über den die Teilnehmer Telegramme empfangen und weiterleiten. Ein von einer Steuervorrichtung als ersten Teilnehmer im Netzwerk ausgesandtes Telegramm durchläuft den Datenpfad und damit die nachfolgenden Teilnehmer des Durchlaufnetzwerkes. Während das Telegramm einen der Teilnehmer durchläuft, hat der betreffende Teilnehmer die Möglichkeit, Daten aus dem Telegramm zu lesen oder Daten in das Telegramm zu schreiben. Ein Telegramm kann ein oder mehrere Datagramme enthalten. Jedes Datagramm umfasst wenigstens einen Header und ein dem Header nachfolgendes Datenfeld. Der Header ist für die Aufnahme von Status- und/oder Steuerinformationen vorgesehen. Das Datenfeld ist für die Aufnahme von Nutzdaten vorgesehen.

Bei einem Schreibvorgang empfängt ein Teilnehmer ein Datagramm und bestimmt Eingabedaten in Abhängigkeit vom Inhalt des Headers des Datagramms. Die Eingabedaten schreibt der Teilnehmer dann in das dem Header nachfolgende Datenfeld. Das Bestimmen der Eingabedaten in Abhängigkeit vom Inhalt des Headers nimmt eine gewisse Zeit in Anspruch. Diese Zeit wird als die Reaktionszeit des betreffenden Teilnehmers bezeichnet.

Da die Länge des Datagramms fest ist, liegt zwischen Ausgabe des Datagrammheaders und der Ausgabe des Datenfeldes des Datagramms (jeweils am Ausgang des Teilnehmers) ein Zeitintervall, dessen Länge ebenfalls fest ist, also nicht von dem Teilnehmer verändert werden darf. In anderen Worten ist der Zeitpunkt der Ausgabe des Headers fest an den Zeitpunkt der Ausgabe des Datenfeldes gekoppelt. Der Teilnehmer kann das Datenfeld jedoch erst dann ausgeben, wenn er die erwähnten Eingabedaten bestimmt und in das Datenfeld geschrieben hat. Da für die Bestimmung der Eingabedaten eine gewisse Zeit (die oben erwähnte Reaktionszeit) erforderlich ist, kann der Teilnehmer den Header nicht beliebig früh ausgeben. Vielmehr muss er die Ausgabe des gesamten Datagramms um eine der Reaktionszeit entsprechende Zeit verzögern (andernfalls würden Header und Datenfeld "auseinandergerissen").

In der Automatisierungstechnik haben sich verschiedene Feldbusprotokolle auf Ethernet mit 100 MBit/s etabliert. Da sich im Consumerbereich inzwischen Ethernet mit 1 GBit/s durchgesetzt hat, ist es wünschenswert, auch Feldbusprotokolle mit Bitraten von 1 GBit/s oder mehr zu übertragen. Gleichzeitig ist es wünschenswert, nicht den gesamten Teilnehmer entsprechend schneller takten zu müssen.

Die DE 198 03 686 A1 offenbart ein getaktetes Feldbussystem mit wenigstens zwei Teilnehmern, die Nachrichten bitsynchron austauschen, wobei der von den Teilnehmern benötigten Verarbeitungszeit durch Leertelegramme Rechnung getragen wird. Aus der DE 10 2007 004 044 A1 und der DE 10 2008 009 835 A1 sind Zwischenfelder in Telegrammen bekannt, die dazu dienen, den freien Platz in Nutzdatenfeldern, die nicht mit Nutzdaten belegt sind, aufzufüllen.

Die US 2005/0259609 A1 betrifft ein Master-Slave-System, bei dem mehrere Slaves parallel an eine serielle Busschnittstelle des Masters, die als 3-Draht-Schnittstelle ausgebildet ist, angeschlossen sind. Der Master kann sowohl Schreib- als auch Lesevorgänge der Slaves auslösen, wobei unterschiedliche Übertragungsformate auf dem Bus zum Datenaustausch genutzt werden können, wobei dann, wenn ein Lesevorgang, also Daten von den Slaves zum Master geschickt werden sollen, Pausebits vorgesehen sind. Die Pausebits dienen dazu, dass sowohl der Master als auch die Slaves den Buszugriff für kurze Zeit freigeben, um so Kollisionen beim Buszugriff zu vermeiden. Während die Pausebits am Bus anliegen, führt der Slave intern Verarbeitungsschritte aus, in dem er Daten aus dem Slave-Registerblock entnimmt.

Es ist Aufgabe der Erfindung, eine möglichst kurze Laufzeit für ein zu sendendes Datagramm zu erreichen.

Diese Aufgabe wird mit den Merkmalen der unabhängigen Ansprüche gelöst. Die abhängigen Ansprüche beschreiben besonders vorteilhafte Ausführungsformen.

Im Folgenden wird ein Datagramm, aus dem ein Teilnehmer adressierte Daten ausliest, als Lesedatagramm und ein Datagramm, in das ein Teilnehmer adressierte Daten einschreibt, als Schreibdatagramm bezeichnet. Telegramme können dabei mehrere Datagramme enthalten, wobei die Datagramme Lesedatagramme oder Schreibdatagramm sein können. Es besteht auch die Möglichkeit Telegramme vorzusehen, die sowohl Lesedatagramme als auch Schreibdatagramme umfassen.

In dem erfindungsgemäßen Verfahren zum Betreiben eines Kommunikationsnetzwerks wird eine getaktete Datenfolge von einem ersten an einen zweiten Teilnehmer des Kommunikationsnetzwerkes gesendet. Pro Taktzyklus sendet der erste Teilnehmer eine Dateneinheit der Datenfolge. Die Datenfolge enthält ein Schreibdatagramm, welches einen Header, ein dem Header nachfolgendes Zwischenfeld und ein dem Zwischenfeld nachfolgendes Datenfeld enthält. Der Header, das Zwischenfeld und das Datenfeld umfassen jeweils eine oder mehrere Dateneinheiten. Der zweite Teilnehmer liest den Header und bestimmt Eingabedaten in Abhängigkeit vom Inhalt des Headers und unabhängig vom Inhalt des Zwischenfeldes innerhalb einer Reaktionszeit des zweiten Teilnehmers. Der zweite Teilnehmer schreibt die so bestimmten Eingabedaten in das Schreibdatagramm, während die Datenfolge den zweiten Teilnehmer durchläuft. Die Länge des Zwischenfeldes ist auf die Taktfrequenz der Datenfolge und die Reaktionszeit des zweiten Teilnehmers abgestimmt.

Es versteht sich, dass die Länge des Zwischenfeldes in dem Schreibdatagramm derart auf die Taktfrequenz der Datenfolge und die Reaktionszeit des zweiten Teilnehmers abgestimmt ist, dass es dem zweiten Teilnehmer gelingt, die Eingabedaten in Abhängigkeit vom Inhalt des Headers zu bestimmen und in das Datenfeld des Datagramms einzuschreiben, während das Datenfeld dem zweiten Teilnehmer für Schreibzugriffe zur Verfügung steht. Das Zwischenfeld ermöglicht eine kürzere Laufzeit zwischen Eingang und Ausgang des zweiten Teilnehmers, d.h., eine kürzere Durchlaufzeit des zweiten Teilnehmers. Bei ausreichender Länge des Zwischenfeldes ist es möglich, den Header des Schreibdatagramms (und ggf. weitere zwischen dem Header und dem Zwischenfeld befindliche Felder des Datagramms) am Ausgang des zweiten Teilnehmers auszugeben, ohne (wie sonst erforderlich) eine gewisse Wartezeit verstreichen zu lassen, um das Datenfeld mit dem geforderten festen zeitlichen Abstand zum Header ausgeben zu können. Zumindest im Prinzip lässt sich nun eine Durchlaufzeit des zweiten Teilnehmers von nur einem Taktzyklus realisieren. In einer solchen Ausführungsform liest der zweite Teilnehmer zunächst pro Taktzyklus jeweils eine Dateneinheit des Headers des Schreibdatagramms und bestimmt während der nachfolgenden dem Zwischenfeld entsprechenden Taktzyklen die Eingabedaten in Abhängigkeit vom Inhalt des soeben gelesenen Headers. Die so bestimmten Eingabedaten schreibt der zweite Teilnehmer dann in das Datenfeld des Schreibdatagramms, während das Datenfeld den zweiten Teilnehmer durchläuft (pro Taktzyklus eine Dateneinheit des Datenfeldes).

In einer Ausführungsform besteht das Zwischenfeld lediglich aus einer Reihe von Füllbits (Dummybits oder Leerbits). Ein Füllbit oder Dummybit oder Leerbit ist ein Bit, dessen Inhalt nicht ausgewertet wird. Zum Beispiel kann das Zwischenfeld eine endliche Folge von Nullbits sein. In einer solchen Ausführungsform hat das Zwischenfeld lediglich den Zweck, den zeitlichen Abstand zwischen Header und Datenfeld zu vergrößern, um eine möglichst schnelle Durchleitung der einzelnen Dateneinheiten des Schreibdatagramms durch den zweiten Teilnehmer zu ermöglichen. Die Verkürzung der Laufzeit geht in diesem Fall mit einer Verlängerung des Telegramms bei gleichbleibendem Volumen der Nutzdaten in dem Telegramm einher. Dies kann eine Verringerung der effektiven Datenrate zur Folge haben (z.B. wenn die Verlängerung der Telegramme dazu führt, dass pro Zeiteinheit weniger Telegramme gesendet werden können). In einem solchen Fall ist es denkbar, dass die Wahl der Länge des Zwischenfeldes einen Kompromiss zwischen Laufzeit und effektiver Datenrate darstellt. Man erkennt, dass das Zwischenfeld eine gewisse Mindestlänge haben muss, um eine minimale Laufzeit der gesendeten Datenfolge im Kommunikationsnetzwerk zu ermöglichen.

Diese Mindestlänge wird im Folgenden auch als die optimale Länge des Zwischenfeldes bezeichnet. Wählt man für das Zwischenfeld eine kürzere Länge (d.h. kürzer als die optimale Länge), so wird dies eine Verlängerung der Durchlaufzeit in wenigstens einem der Teilnehmer des Kommunikationsnetzwerks erfordern, dafür wird das Telegramm aber kürzer sein, d.h., es werden mehr Datagramme pro Zeiteinheit übertragen werden können. Ein verkürztes Zwischenfeld (d.h. ein Zwischenfeld mit einer Länge, die kürzer als die optimale Länge ist) kann insbesondere dann sinnvoll sein, wenn viele Telegramme in dichter Folge (d.h. in kurzen zeitlichen Abständen) gesendet werden sollen, sodass die einzelnen Telegramme nicht länger werden dürfen. Wenn jedoch die Maximierung der pro Zeiteinheit übertragenen Nutzdaten (d.h. die Nutzdatenrate oder effektive Datenrate) nicht das entscheidende Kriterium ist, kann es sinnvoll sein, für das Zwischenfeld die oben definierte optimale Länge zu wählen.

Es versteht sich, dass die optimale Länge des Zwischenfeldes (d.h. die Mindestlänge für das Erzielen einer kürzest möglichen Laufzeit) von der Taktfrequenz der Datenfolge und von der Reaktionszeit des zweiten Teilnehmers abhängt. Je höher die Taktfrequenz der Datenfolge und je länger die Reaktionszeit des zweiten Teilnehmers ist, umso länger wird die optimale Länge des Zwischenfeldes sein. Gemäß einer Ausführungsform enthält der Header eine Angabe der Länge des Zwischenfeldes. Auf die Weise wird jeder Teilnehmer, der die Datenfolge empfängt, in die Lage versetzt, den Anfang des Datenfeldes zu identifizieren. Alternativ ist beispielsweise denkbar, dass jedes Datagramm in der Datenfolge ein Zwischenfeld enthält, wobei die Länge des Zwischenfeldes für alle Datagramme dieselbe ist. In diesem Fall würde es zum Beispiel genügen, jeden Teilnehmer entsprechend der für alle Datagramme gleichen Länge des Zwischenfeldes zu programmieren, z.B. bei einer Inbetriebnahme des Kommunikationsnetzwerkes oder nach jeder Anpassung der Länge des Zwischenfeldes.

An dieser Stelle sei bemerkt, dass alle offenbarten Merkmale des ersten Teilnehmers und des zweiten Teilnehmers in identischer oder ähnlicher Weise in jedem anderen Teilnehmer des Kommunikationsnetzwerks verwirklicht sein können.

Gemäß einer Ausführungsform ist das Datagramm ein Schreibdatagramm und das Telegramm enthält außerdem ein Lesedatagramm, welches einen Header und ein unmittelbar auf den Header folgendes Datenfeld enthält. Das Lesedatagramm enthält folglich kein Zwischenfeld, das mit dem Zwischenfeld des Schreibdatagramms vergleichbar wäre. Diese Ausführungsform beruht auf der Erkenntnis, dass ein Lesezugriff auf das Datenfeld durch den zweiten Teilnehmer im Gegensatz zu einem Schreibzugriff zeitlich unproblematisch ist, da der zweite Teilnehmer für den Lesezugriff keine Daten bereitstellen muss.

Gemäß einer Ausführungsform enthält der Header eine Adresse und der zweite Teilnehmer ermittelt die Eingabedaten, indem er die Eingabedaten aus einem mit der Adresse bezeichneten Speicherbereich liest. Das Abrufen der Daten aus dem Speicherbereich kann eine gewisse Zeit in Anspruch nehmen. In manchen Ausführungsformen kann die oben erwähnte Reaktionszeit zum größten Teil aus der für das Abrufen der Eingabedaten aus dem Speicherbereich erforderlichen Zeit bestehen.

Gemäß einer Ausführungsform sind ein Eingang und ein Ausgang des zweiten Teilnehmers über ein Schieberegister miteinander verbunden. Das Schieberegister wird mit der Taktfrequenz getaktet und dabei von der Datenfolge durchlaufen. Das Schieberegister kann zum Beispiel einen Leseabschnitt und einen dem Leseabschnitt nachgelagerten Schreibabschnitt aufweisen, wobei der zweite Teilnehmer imstande ist, Daten aus dem Leseabschnitt (und damit aus der Datenfolge) zu lesen und Daten (z.B. die erwähnten Eingabedaten) in den Schreibabschnitt (und damit in die Datenfolge) einzuschreiben. Während der Header den Leseabschnitt durchläuft, liest der zweite Teilnehmer den Header aus dem Leseabschnitt. Eine gewisse Zeit später, nämlich während das Eingabefeld den Schreibabschnitt durchläuft, schreibt der zweite Teilnehmer die Eingabedaten in den Schreibabschnitt und damit in das Datenfeld des Datagramms.

Das Schieberegister kann ferner einen zwischen dem Leseabschnitt und dem Schreibabschnitt befindlichen Zwischenabschnitt aufweisen. Der Zwischenabschnitt hat den Effekt, dass es die Zeit zwischen dem Lesevorgang und dem Schreibvorgang verlängert. Wenn der Zwischenabschnitt ausreichend lang ist (d.h. mindestens die optimale Länge hat), kann das erwähnte Zwischenfeld entfallen. Ist jedoch die Länge des Zwischenfeldes kürzer als die optimale Länge, so verschafft der Zwischenabschnitt dem zweiten Teilnehmer genügend Zeit, um nach Lesen des Headers die Eingabedaten zu ermitteln und in den Schreibabschnitt des Schieberegisters zu schreiben. Je länger der Zwischenabschnitt, desto länger wird auch die Durchlaufzeit des zweiten Teilnehmers sein. In einer Variante dieser Ausführungsform ist der Schreibabschnitt nicht dem Leseabschnitt nachgelagert, sondern die beiden Abschnitte überlappen teilweise oder vollständig.

Gemäß einer Ausführungsform umfasst das Schieberegister nur ein einziges Speicherelement, welches in jedem Taktzyklus der Datenfolge genau eine Dateneinheit der Datenfolge aufnimmt. In diesem Fall hat das Schieberegister und damit der zweite Teilnehmer eine Durchlaufzeit von genau einem Taktzyklus der Datenfolge. Der zweite Teilnehmer empfängt dann in einem Taktzyklus eine Dateneinheit der Datenfolge und gibt dieselbe Dateneinheit (mit geändertem oder ungeändertem Inhalt) bereits im nächsten Taktzyklus an seinem Ausgang aus.

Gemäß einer Ausführungsform sind die Länge des Schieberegisters und die Länge des Zwischenfeldes aufeinander abgestimmt. Alternativ oder zusätzlich kann das Verfahren eine Maßnahme umfassen, mit der die Länge des Schieberegisters und die Länge des Zwischenfeldes aufeinander abgestimmt werden. Die Maßnahme kann zum Beispiel ein Minimieren der Länge des Schieberegisters bei gegebener Länge des Zwischenfeldes oder ein Minimieren der Länge des Zwischenfeldes bei gegebener Länge des Schieberegisters umfassen.

In vielen Anwendungen kann es sinnvoll sein, die Durchlaufzeit des zweiten Teilnehmers zu minimieren und zu diesem Zweck das Schieberegister so kurz wie möglich und das Zwischenfeld so lang wie nötig zu wählen. In anderen Anwendungen hingegen (z.B. wenn eine hohe effektive Datenübertragungsrate gewünscht ist oder wenn aus anderen Gründen das Datagramm möglichst kurz sein soll) kann es hingegen sinnvoll sein, die Durchlaufzeit des zweiten Teilnehmers zu verlängern und das Zwischenfeld zu verkürzen.

Gemäß einer Ausführungsform enthält das Zwischenfeld wenigstens ein Leerelement. Ein Leerelement (in dieser Anmeldung auch als Füllelement oder Dummyelement bezeichnet) ist eine Dateneinheit, deren Inhalt in dem Verfahren nicht ausgewertet wird. Auf den Inhalt der Leerelemente (d.h. auf die Werte der Bits des Leerelements) kommt es also nicht an. Jedes Leerelement in dem Zwischenfeld dient vielmehr lediglich dazu, dem Zwischenfeld eine gewisse Länge zu verleihen.

Gemäß einer Ausführungsform kann das Zwischenfeld auch Statusinformationen wie Interrupts etc. aufnehmen, die von dem Teilnehmer eingelesen werden. Das Einlesen von solchen Statusinformationen in das Zwischenfeld verletzt nicht das Ziel, die Zeit zum Adressieren des ersten Datenbytes zu verlängern, weil diese Statusinformationen nicht über das Adressfeld ausgewählt, sondern vom Teilnehmer vorab oder permanent bereitgehalten werden. Alternativ kann das Zwischenfeld können auch genutzt werden, um nicht adressierte Daten an den Teilnehmer ähnlich einem Broadcast-Telegramm zu verteilen. Hierdurch wird die Effektivität der Datenübertragung erhöht.

Gemäß einer Ausführungsform enthält die Datenfolge mehrere Schreibdatagramme. Jedes dieser Datagramme enthält jeweils einen Header, ein dem Header nachfolgendes Zwischenfeld und ein dem Zwischenfeld nachfolgendes Datenfeld. Die Länge des Zwischenfeldes kann jeweils auf die Taktfrequenz der Datenfolge und auf eine Reaktionszeit wenigstens eines der Teilnehmer abgestimmt sein. Es versteht sich, dass die Datagramme nacheinander gesendet werden. Jedes der Datagramme kann an einen bestimmten oder an mehrere bestimmte Teilnehmer des Kommunikationsnetzwerkes adressiert sein. Die Datagramme können zum Beispiel Abschnitte eines Telegramms sein. Die Datenfolge kann selbstverständlich weitere Datagramme enthalten (zum Bespiel ein oder mehrere Lesedatagramme), die nicht notwendigerweise ein Zwischenfeld enthalten.

Gemäß einer Ausführungsform ist die Länge des Zwischenfeldes (Zwischenfeldlänge) in allen Schreibdatagrammen dieselbe. Die Zwischenfeldlänge kann dann zum Beispiel in einem Header eines die Datagramme umfassenden Telegramms definiert werden. In einer alternativen Ausgestaltung wird die Zwischenfeldlänge in jedem Teilnehmer gespeichert (z.B. in einem eigens dafür vorgesehenen Register).

Gemäß einer Ausführungsform enthält die Datenfolge ein Telegramm, welches einen Telegrammheader und mehrere dem Telegrammheader nachfolgende Datagramme enthält. Mit jedem Datagramm kann zum Beispiel ein bestimmter Teilnehmer adressiert werden. Damit lässt sich zum Beispiel eine synchrone Ansteuerung der Teilnehmer (z.B. Vorrichtungen in einer automatisierten Fertigungsanlage) realisieren. Eine derartige Datenfolge ist beispielsweise in EtherCAT-Systemen realisierbar.

Gemäß einer Ausführungsform sind die Länge des Zwischenfeldes und die Taktfrequenz der Datenfolge aufeinander abgestimmt. Alternativ oder zusätzlich kann das Verfahren eine Maßnahme umfassen, mit der die Länge des Zwischenfeldes und die Taktfrequenz aufeinander abgestimmt werden. Zum Beispiel kann die Maßnahme ein Minimieren der Länge des Zwischenfeldes bei gegebener Taktfrequenz oder ein Maximieren der Taktfrequenz bei gegebener Länge des Zwischenfeldes umfassen. Eine Erhöhung der Taktfrequenz führt im Allgemeinen zu einer kürzeren Durchlaufzeit eines jeden Teilnehmers. Eine Verlängerung des Zwischenfeldes erlaubt die Verwendung höherer Taktfrequenzen, da sie jedem Teilnehmer mehr Zeit verschafft, um auch bei einer verkürzten Durchlaufzeit den Datagrammheader zu lesen, die Eingabedaten zu bestimmen und die Eingabedaten in das Datenfeld des Datagramms zu schreiben.

Gemäß einer Ausführungsform umfasst das Verfahren eine Konfigurationsmaßnahme, mit der die Durchlaufzeit des zweiten Teilnehmers (d.h. die Laufzeit vom Eingang zum Ausgang des zweiten Teilnehmers) auf der Grundlage der Länge des Zwischenfeldes und der Taktfrequenz eingestellt wird. In einer speziellen Ausführungsform wird der zweite Teilnehmer so betrieben, dass er seine Durchlaufzeit auf der Grundlage der Länge des Zwischenfeldes und der Taktfrequenz selbständig einstellt. Dies kann zum Beispiel in einer Konfigurationsphase erfolgen, zum Beispiel unter Verwendung von Testdatagrammen, wobei getestet wird, ob die Testdatagramme korrekt verarbeitet werden.

Gemäß einer Ausführungsform zeigt der zweite Teilnehmer dem ersten Teilnehmer die Reaktionszeit des zweiten Teilnehmers an. Der zweite Teilnehmer (z.B. ein Slave-Teilnehmer) ermöglicht es damit dem ersten Teilnehmer (z.B. ein Master-Teilnehmer), eine geeignete Länge des Zwischenfeldes einzustellen. Gemäß einer speziellen Ausführungsform zeigt jeder der Teilnehmer, die ein von dem ersten Teilnehmer ausgesandtes Datagramm oder Telegramm im Durchlauf verarbeiten, dem ersten Teilnehmer seine jeweilige Reaktionszeit an. Die Teilnehmer ermöglichen es damit dem ersten Teilnehmer (z.B. dem Master-Teilnehmer), eine für alle Teilnehmer ausreichende Länge des Zwischenfeldes einzustellen.

Gemäß einer Ausführungsform zeigt der erste Teilnehmer (z.B. ein Master-Teilnehmer) dem zweiten Teilnehmer (z.B. ein Slave-Teilnehmer) die Länge des Zwischenfeldes an. Der zweite Teilnehmer wird damit in die Lage versetzt, seine Durchlaufzeit in Abhängigkeit von der Länge des Zwischenfeldes so weit wie möglich zu reduzieren. Außerdem wird der zweite Teilnehmer in die Lage versetzt, das Schreibdatagramm korrekt zu verarbeiten (z.B. Eingabedaten an der korrekten Position des Datagramms einzuschreiben). Gemäß einer Ausführungsform zeigt der erste Teilnehmer die Länge des Zwischenfeldes dadurch an, dass er in die von ihm ausgesandte getaktete Datenfolge eine Angabe der Länge des Zwischenfeldes einschreibt, zum Beispiel in den Header eines jeden ausgesandten Telegramms oder (sofern ein Telegramm mehrere Datagramme mit jeweils unterschiedlich langen Zwischenfeldern enthält) in den Header eines jeden Datagramms.

In einer anderen Ausführungsform übermittelt der erste Teilnehmer dem zweiten Teilnehmer (und ggf. anderen Teilnehmern) die Länge des Zwischenfeldes in einem separaten Konfigurationssignal, zum Beispiel während einer Konfigurationsphase im Betrieb des Kommunikationsnetzwerkes.

Das erfindungsgemäße Kommunikationsnetzwerk zeichnet sich dadurch aus, dass es zur Durchführung eines Verfahrens gemäß einer der oben genannten Ausführungsformen eingerichtet ist.

Das Kommunikationsnetzwerk kann zum Beispiel ein Feldbussystem sein. Gemäß einer Ausführungsform verwendet das Kommunikationssystem ein Ethernet-Protokoll. Alternativ können andere Kommunikationsprotokolle verwendet werden.

Gemäß einer speziellen Ausführungsform ist das Kommunikationsnetzwerk ein EtherCAT-Netzwerk. Ein EtherCAT-Netzwerk ist ein spezielles von Beckhoff Automation entwickeltes Feldbussystem, das auf dem Ethernet-Protokoll aufbaut.

Die erfindungsgemäße Steuervorrichtung zur Verwendung als ein erster Teilnehmer in einem Kommunikationsnetzwerk ist dazu eingerichtet, eine getaktete Datenfolge zu erzeugen und die getaktete Datenfolge an einem Ausgang der Steuervorrichtung zur Übermittlung an einen zweiten Teilnehmer des Kommunikationsnetzwerkes auszugeben. Die Steuervorrichtung erzeugt dabei pro Taktzyklus eine Dateneinheit der Datenfolge. Die Datenfolge enthält ein Schreibdatagramm, welches einen Header, ein dem Header nachfolgendes Zwischenfeld und ein dem Zwischenfeld nachfolgendes Datenfeld enthält. Der Header, das Zwischenfeld und das Datenfeld umfassen jeweils eine oder mehrere Dateneinheiten. Eine Dateneinheit ist, wie bereits oben erwähnt, eine endliche Bitfolge mit einer festen Länge, wobei die Länge für alle Dateneinheiten dieselbe ist. Eine Dateneinheit kann zum Beispiel ein Bit, ein Byte (8 Bits) oder jede andere Dateneinheit sein. Der Header, das Zwischenfeld und das Datenfeld umfassen jeweils eine oder mehrere Dateneinheiten. Dem Header, dem Zwischenfeld und dem Datenfeld sind dementsprechend jeweils ein oder mehrere Taktzyklen zugeordnet. Die Steuervorrichtung zeichnet sich dadurch aus, dass die Länge des Zwischenfeldes auf die Taktfrequenz der Datenfolge und auf die Reaktionszeit des zweiten Teilnehmers abgestimmt werden kann. Damit ergeben sich die oben mit Bezug auf das erfindungsgemäße Verfahren erläuterten Vorteile.

Die erfindungsgemäße Datenverarbeitungsvorrichtung zur Verwendung als ein zweiter Teilnehmer in einem Kommunikationsnetzwerk ist dazu eingerichtet, eine getaktete Datenfolge zu empfangen, wobei sie pro Taktzyklus eine Dateneinheit der Datenfolge empfängt. Die Datenverarbeitungsvorrichtung ist insbesondere für den Empfang und die Verarbeitung einer Datenfolge eingerichtet, die ein Datagramm enthält, welches einen Header, ein dem Header nachfolgendes Zwischenfeld und ein dem Zwischenfeld nachfolgendes Datenfeld enthält, wobei der Header, das Zwischenfeld und das Datenfeld jeweils eine oder mehrere Dateneinheiten umfassen. Die Datenverarbeitungsvorrichtung zeichnet sich dadurch aus, dass sie während eines Durchlaufs des Datagramms durch die Datenverarbeitungsvorrichtung den Header des Datagramms liest und Eingabedaten in Abhängigkeit vom Inhalt des Headers und unabhängig vom Inhalt des Zwischenfeldes innerhalb einer Reaktionszeit bestimmt und die Eingabedaten in das Datenfeld des Datagramms schreibt.

Die Erfindung wird nachfolgend unter Bezugnahme auf die beigefügten Zeichnungen näher erläutert. Gleiche Bezugszeichen bezeichnen gleiche oder äquivalente Komponenten.
Fig. 1 zeigt schematisch ein Beispiel einer Ausführungsform eines Kommunikationsnetzwerkes.
Fig. 2 zeigt schematisch ein Beispiel einer herkömmlichen Ausführungsform eines Datagramms.
Fig. 3 zeigt schematisch ein Beispiel einer herkömmlichen Ausführungsform eines Verfahrens zum Betreiben eines Kommunikationsnetzwerks.
Fig. 4 zeigt schematisch ein Beispiel einer Ausführungsform eines Datagramms.
Fig. 5 zeigt schematisch ein Beispiel einer Ausführungsform eines Verfahrens zum Betreiben eines Kommunikationsnetzwerkes.
Fig. 6 zeigt ein Flussdiagramm eines Beispiels einer Ausführungsform eines Verfahrens zur Verarbeitung eines Datagramms in einem Teilnehmer eines Kommunikationsnetzwerkes.
Fig. 7 zeigt schematisch ein Beispiel einer Ausführungsform eines zweiten und eines dritten Teilnehmers.

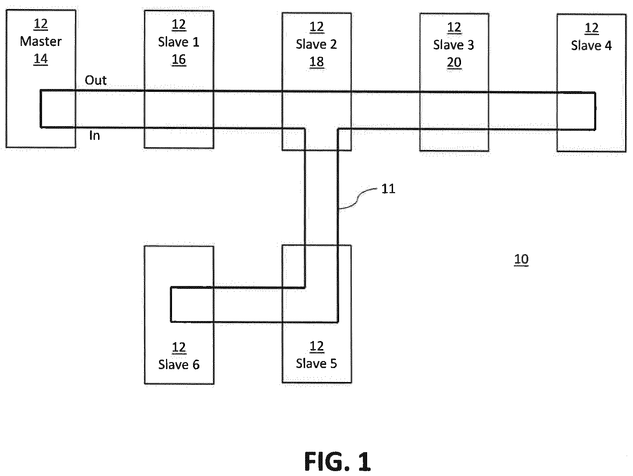

Das in Fig. 1 skizzierte Beispiel eines Kommunikationsnetzwerkes 10 umfasst mehrere Teilnehmer 12, die über einen Datenpfad 11 kommunikationstechnisch miteinander in Verbindung stehen. Im Betrieb werden Telegramme entlang des Datenpfades 11 übermittelt. Als Beispiel wird angenommen, dass ein erster Teilnehmer 14 (z.B. ein Master-Teilnehmer) ein Telegramm aussendet, welches dann die weiteren Teilnehmer 12 entlang des Datenpfades 11 durchläuft und dabei von den Teilnehmern verarbeitet wird. Jeder der Teilnehmer 12 wird von wenigstens einem Abschnitt (Segment) des Datenpfades 11 durchlaufen.

Jedem Segment des Datenpfades 11, welches sich von einem Eingang eines der Teilnehmer 12 zu einem entsprechenden Ausgang desselben Teilnehmers erstreckt, kann eine Segmentlänge (gemessen z.B. in Dateneinheiten) und eine entsprechende Laufzeit (messbar z.B. in Taktzyklen) zugeordnet werden. Die Länge eines gegebenen Segments und die ihm zugeordnete Laufzeit hängen wie folgt miteinander zusammen: Laufzeit = Segmentlänge: Datenrate. Unter der Datenrate ist die Anzahl ausgesandter Dateneinheiten pro Zeitintervall zu verstehen, d.h., der Kehrwert des Taktzyklus.

Eine Erhöhung der Datenrate (d.h. eine schnellere Taktung der vom ersten Teilnehmer 14 ausgesandten Datenfolge) führt dementsprechend zu einer kürzeren Laufzeit auf jedem Segment des Datenpfades 11. Je höher die Datenrate, desto weniger Zeit steht jedem Teilnehmer zur Verfügung, um nach Empfang eines ersten Abschnitts der getakteten Datenfolge Eingabedaten zu bestimmen und in einem bestimmten dafür vorgesehenen späteren Abschnitt der Datenfolge einzuschreiben.

Bei einer zu hohen Taktfrequenz kann der Fall auftreten, dass der für die Aufnahme der Eingabedaten vorgesehene Abschnitt der Datenfolge den zweiten Teilnehmer 16 bereits durchlaufen hat, während der zweite Teilnehmer 16 noch mit der Bestimmung der Eingabedaten beschäftigt ist. Die Taktfrequenz des Kommunikationsnetzwerkes (d.h. die Taktfrequenz der die Teilnehmer durchlaufenden Datenfolge) kann daher nicht ohne Weiteres beliebig erhöht werden. Entsprechend gilt, dass die Laufzeit von einem beliebigen Teilnehmer zu einem anderen Teilnehmer nicht ohne Weiteres durch eine Erhöhung der Taktfrequenz verkürzt werden kann.

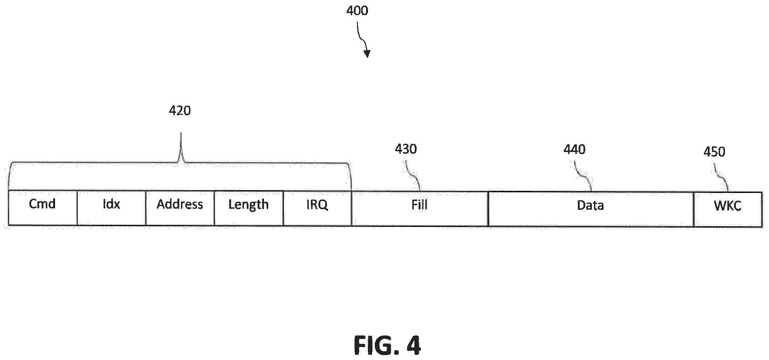

Diese Schwierigkeit wird durch das Vorsehen eines Zwischenfeldes im Datagramm überwunden, wie weiter unten mit Bezug auf Fig. 4 bis 6 näher erläutert wird. Damit sind dann zum Beispiel in einem EtherCAT-Netzwerk Datenraten von mehr als 1 GBit/s (entsprechend einer Taktfrequenz von mehr als 1 GHz) realisierbar.

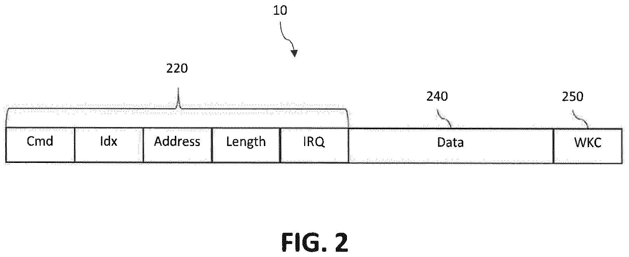

Fig. 2 zeigt schematisch ein Beispiel einer herkömmlichen Ausführungsform eines Datagramms 10, welches ein Befehlsfeld CMD, ein Identifikationsfeld IDX, ein Adressfeld ADDRESS, ein Längenfeld LENGTH, ein Interruptfeld IRQ, ein Datenfeld DATA sowie ein Endfeld WKC aufweist. Die Felder des Datagramms 200 sind in Fig. 2 zeitlich geordnet dargestellt. Das heißt, es wird zunächst das Feld CMD, dann das Feld IDX, dann das Feld ADDRESS, usw. gesendet. Die dem Datenfeld DATA vorgelagerten Felder des Datagramms werden zusammenfassend als Header 220 bezeichnet. In dem Beispiel umfasst der Header 220 die Felder CMD; IDX, ADDRESS, LENGTH und IRQ. Unter dem Inhalt eines Feldes in einer Datenfolge ist der aktuelle Wert oder der Status des Feldes zu verstehen, das heißt, der von dem Feld angezeigte Wert. Ein einzelnes Bit hat zum Beispiel entweder den Wert 0 oder 1.

Das Befehlsfeld CMD gibt an, auf welche Weise das Datagramm 200 in einem Teilnehmer verarbeitet werden soll. Zum Beispiel kann in einer Ausführungsform ein erster Wert des Befehlsfeldes CMD das Datagramm als ein Lesedatagramm kennzeichnen, d.h. als ein Datagramm, dessen Daten (der Inhalt des Datenfeldes DATA) von dem adressierten Teilnehmer gelesen werden sollen. Ein anderer zweiter Wert des Befehlsfeldes CMD kann das Datagramm 200 als ein Schreibdatagramm kennzeichnen, d.h., als ein Datagramm, dessen Datenfeld DATA Daten von dem adressierten Teilnehmer aufnehmen soll. Mit dem Identifikationsfeld IDX kann der erste Teilnehmer 14 empfangene Datagramme den gesendeten Datagrammen zuordnen.. Mit dem Adressfeld ADDRESS können ein oder mehrere Teilnehmer ausgewählt werden, für die das Datagramm bestimmt ist, und es kann ein bestimmter Speicherort (z.B. in dem adressierten Teilnehmer) angegeben werden. Das Längenfeld LENGTH gibt die Länge des Datenfeldes DATA an. Das Interruptfeld IRQ kann einen von einem Teilnehmer ausgelösten Interrupt definieren. Mit dem Datenfeld DATA (Datenfeld 240) können Nutzdaten übermittelt werden, zum Beispiel für den zweiten Teilnehmer 16 (siehe Fig. 1) bestimmte Daten (Eingabedaten; in diesem Fall ist das Datagramm ein Lesedatagramm) oder von dem zweiten Teilnehmer 16 einzugebende Daten (Ausgabedaten; in diesem Fall ist das Datagramm ein Schreibdatagramm). Der hier skizzierte Aufbau eines Datagramms ist nur ein Beispiel. In einem anderen Beispiel (nicht gezeigt) umfasst der Header andere als die hier gezeigten Felder. In einem weiteren Beispiel enthält das Datagramm kein Endfeld WKC.

Im Folgenden wird als Beispiel angenommen, dass die getaktete Datenfolge (die das Datagramm 200 enthält) von dem ersten Teilnehmer 14 gesendet und von dem zweiten Teilnehmer 16 empfangen wird. Ferner wird angenommen, dass das Befehlsfeld CMD und das Adressfeld ADDRESS das Datagramm 200 als ein an den zweiten Teilnehmer 16 adressiertes Schreibdatagramm kennzeichnen. Der zweite Teilnehmer 16 empfängt zunächst den Header des Datagramms 200 und erkennt anhand des Identifikationsfeldes IDX und des Befehlsfeldes CMD, dass er Daten aus dem mit dem Adressfeld ADDRESS und dem Längenfeld LENGTH bezeichneten Speicherbereich (z.B. einem internen Speicherbereich des zweiten Teilnehmers 16) holen und in das Datenfeld DATA einschreiben soll. Der zweite Teilnehmer 16 fordert dementsprechend den Inhalt des bezeichneten Speicherbereichs an. Zwischen dem Zeitpunkt des Lesens der Felder ADDRESS und LENGTH und dem Erhalt der angeforderten Speicherdaten vergeht eine in dieser Anmeldung als Reaktionszeit bezeichnete Zeit. Der zweite Teilnehmer 16 schreibt die beschafften Speicherdaten (d.h. den Inhalt des durch ADDRESS und LENGTH definierten Speicherbereichs) dann als Eingabedaten in das Datenfeld DATA. Voraussetzung hierfür ist, dass zu diesem Zeitpunkt das Datenfeld DATA den zweiten Teilnehmer 16 noch nicht durchlaufen hat. Dies gelingt zum Beispiel durch die Wahl einer hinreichend niedrigen Taktfrequenz, so dass eine ausreichend lange Laufzeit vom Eingang zum Ausgang des zweiten Teilnehmers 16 gewährleistet ist. In dieser herkömmlichen Ausführungsform kann aufgrund der nicht vernachlässigbaren Reaktionszeit des zweiten Teilnehmers 16 die Taktfrequenz nicht beliebig erhöht werden.

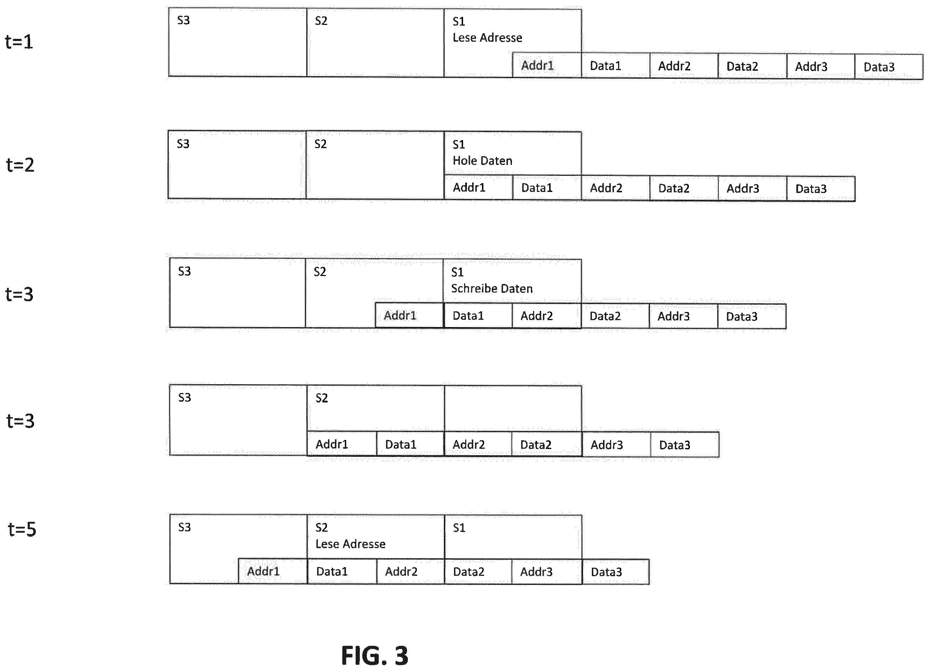

Fig. 3 zeigt ein Beispiel einer herkömmlichen Ausführungsform eines Verfahrens zur Verarbeitung einer Datenfolge im Durchlauf durch mehrere Teilnehmer. In dem Beispiel durchläuft die Datenfolge nacheinander die drei Teilnehmer S1, S2 und S3 (z.B. die Slave-Teilnehmer 16, 18, 20 in Fig. 1). Die Datenfolge umfasst in dem Beispiel drei aufeinanderfolgende Datagramme, die jeweils ein Adressfeld ADDR1 bzw. ADDR2 bzw. ADDR3 und ein dem jeweiligen Adressfeld nachfolgendes Datenfeld DATA1 bzw. DATA2 bzw. DATA3 enthalten. Der Einfachheit halber wird hier angenommen, dass die Adressfelder und die Datenfelder jeweils aus genau einer Dateneinheit bestehen. Fasst man den Datenpfad, auf dem die Datenfolge übertragen wird, als ein Schieberegister auf, so bedeutet dies, dass die Adressfelder und die Datenfelder pro Taktzyklus jeweils um eine Position in dem Schieberegister weitergeschoben werden.

Die Zeichnung veranschaulicht die Position der Datenfolge auf dem Datenpfad zu fünf aufeinander folgenden Zeitpunkten t = 1 bis t = 5, wobei als Zeiteinheit die Länge eines Taktzyklus gewählt wurde. Zum Zeitpunkt t = 1 hat das Adressfeld ADDR1 des ersten Datagramms den Teilnehmer S1 erreicht und S1 liest die im Adressfeld ADDR1 angegebene Speicheradresse. Zum Zeitpunkt t = 2 holt S1 Eingabedaten von einem mit der Adresse bezeichneten Speicherbereich. Zum Zeitpunkt t = 3 schreibt S1 die Eingabedaten in das Datenfeld DATA1 des ersten Datagramms, was möglich ist, da sich DATA1 zu diesem Zeitpunkt noch innerhalb des Teilnehmers S1 befindet. Die Verarbeitung der späteren Datagramme (ADDR2, DATA2) und (ADDR3, DATA3) durch die dem Teilnehmer S1 nachgelagerten Teilnehmer S2 und S3 erfolgt auf ähnliche Weise. In dem Beispiel hat das Adressfeld ADDR2 des zweiten Datagramms (ADDR2, DATA2) den Teilnehmer S2 zum Zeitpunkt t = 5 erreicht und wird dann von S2 gelesen. Die weitere Verarbeitung erfolgt zu späteren Zeitpunkten, die in Fig. 3 nicht dargestellt sind.

Gemäß einer Ausführungsform werden die einzelnen Teilnehmer (in Fig. 3 die Teilnehmer S1, S2 und S3) über die Reihenfolge der Datagramme adressiert. In diesem Fall kann auf das oben beschriebene Adressfeld ADDRESS (oder eine sonstige Angabe zur Adressierung eines oder mehrerer Teilnehmer) verzichtet werden.

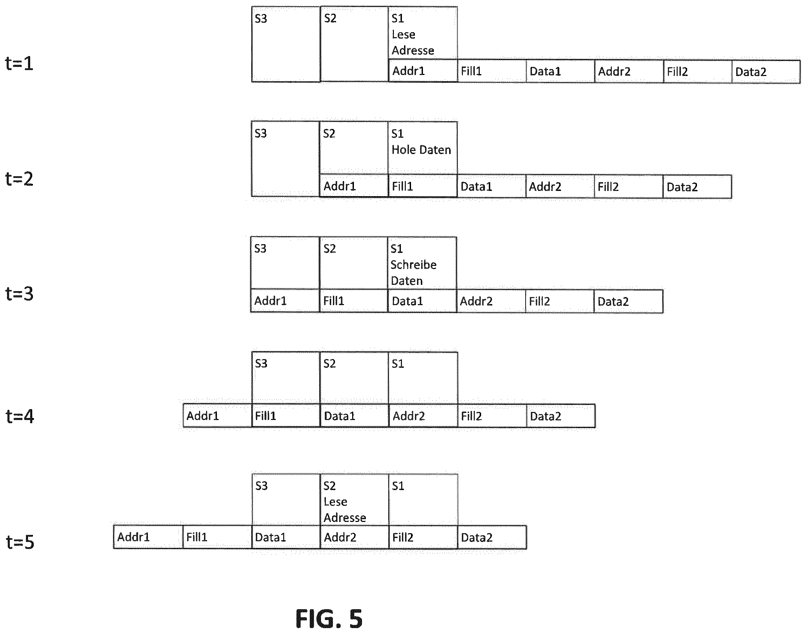

In einer anderen Ausführungsform, die zum Beispiel in EtherCAT realisierbar, enthält jedes Datagramm ein Adressfeld, z.B. das Adressfeld ADDRESS (siehe oben) zur Adressierung eines oder mehrerer Teilnehmer, für die das betreffende Datagramm bestimmt ist. Dies erlaubt es, die Datagramme in beliebiger Reihenfolge zu senden. Das heißt, die Reihenfolge der Datagramme im Telegramm ist willkürlich. Die Reihenfolge der Datagramme im Telegramm kann insbesondere unabhängig von der Reihenfolge der Teilnehmer auf dem Datenpfad gewählt werden. Es versteht sich, dass das in Fig. 3 skizzierte Verfahren (in welchem zur Vereinfachung angenommen wurde, dass jedes Datagramm nur ein Adressfeld und ein Datenfeld umfasst), ohne Weiteres auf Ausführungsformen übertragbar ist, in denen jedes Datagramm ein Adressfeld (z.B. ADDRESS) zur Addressierung eines oder mehrerer Teilnehmer enthält. Dasselbe gilt entsprechend für das unten mit Bezug auf Fig. 5 beschriebene Verfahren.

Das in Fig. 4 skizzierte Beispiel eines Datagramms 400 enthält einen Header 420, ein dem Header nachfolgendes Zwischenfeld 430 und ein dem Zwischenfeld 430 nachfolgendes Datenfeld 440. Das Datagramm 400 kann ferner ein dem Datenfeld 440 nachfolgendes Endfeld 450 aufweisen. Der Header 420 und das Datenfeld 440 sind mit dem Header 220 und dem Datenfeld 240 des in Fig. 2 gezeigten Datagramms 200 vergleichbar und können wie letztere aufgebaut sein und verarbeitet werden. Mit dem Steuerfeld 420 (z.B. mit dem darin enthaltenen Adressfeld ADDRESS) kann zum Beispiel ein Teilnehmer ausgewählt werden, der Eingabedaten in das Datenfeld 440 schreiben soll. Das Zwischenfeld 430 dient primär oder ausschließlich dazu, einen Abstand zwischen dem Header 420 und dem Datenfeld 440 zu schaffen, um es einem Teilnehmer auch bei einer sehr kurzen Laufzeit des Datagramms 400 durch den betreffenden Teilnehmer zu ermöglichen, Eingabedaten in Abhängigkeit vom Inhalt des Headers 420 zu bestimmen und die so bestimmten Eingabedaten rechtzeitig in das Datenfeld 440 zu schreiben. Die Länge des Zwischenfeldes 430 kann auf die Taktfrequenz, mit der die Dateneinheiten des Datagramms 400 gesendet werden, und auf die Reaktionszeit des Teilnehmers oder der Teilnehmer, die das Datagramm 400 verarbeiten sollen, abgestimmt werden. Wenn die Taktfrequenz erhöht werden soll, so wird das Zwischenfeld im Allgemeinen verlängert werden müssen.

Das Zwischenfeld 430 kann zumindest dann vorteilhaft sein, wenn es sich bei dem Datagramm 400 um ein Schreibdatagramm handelt, das heißt im konkreten Beispiel, wenn das Befehlsfeld CMD das Datagramm 400 als Schreibdatagramm kennzeichnet. Allgemein ist ein Schreibdatagramm jedes Datagramm, das einen Teilnehmer dazu veranlasst, Daten in das Datenfeld des Datagramms zu schreiben. Ein Lesedatagramm hingegen ist jedes Datagramm, das ein Teilnehmer dazu veranlasst, Daten aus dem Datenfeld des Datagramms zu lesen.

Die Datenfolge kann sowohl Schreibdatagramme als auch Lesedatagramme enthalten. In einem Lesedatagramm würde ein Zwischenfeld zwischen Header und Datenfeld in der Regel keinen Nutzen ergeben, sondern das Lesedatagramm nur unnötig verlängern. Deshalb folgt in einem Lesedatagramm auf den Header vorzugsweise unmittelbar das Datenfeld. Das heißt, ein Zwischenfeld ist im Lesedatagramm nicht vorgesehen. Ein Lesedatagramm kann zum Beispiel wie das in Fig. 2 gezeigte Datagramm 200 aufgebaut sein, wo auf den Header 220 unmittelbar das Datenfeld 240 folgt.

Fig. 5 zeigt schematisch ein Beispiel einer getakteten Datenfolge, die zwei aufeinanderfolgende Datagramme enthält, nämlich ein erstes Datagramm und ein nachfolgendes zweites Datagramm. Das erste Datagramm (ADDR1, FILL1, DATA1) umfasst ein Adressfeld ADDR1, ein dem Adressfeld nachfolgendes Zwischenfeld FILL1, und ein dem Zwischenfeld nachfolgendes Datenfeld. Das zweite Datagramm (ADDR2, FILL2, DATA2) ist ähnlich aufgebaut und umfasst ein Adressfeld ADDR2, ein Zwischenfeld FILL2 und ein dem Zwischenfeld nachfolgendes Datenfeld DATA2. Die Adressfelder ADDR1 und ADDR2 bilden in dem Beispiel jeweils einen Header des betreffenden Datagramms. In der Praxis wird ein Header eines Datagramms in der Regel nicht nur aus einem Adressfeld bestehen, sondern zusätzliche Felder enthalten, doch spielen derartige zusätzliche Felder für die vorliegende vereinfachte Beschreibung keine Rolle. In jedem Taktzyklus rückt die Datenfolge (ähnlich wie oben mit Bezug auf Fig. 3 beschrieben) jeweils um eine Dateneinheit vor und durchläuft so die Teilnehmer, hier die Teilnehmer S1, S2 und S3. In der Zeichnung ist die Datenfolge jeweils zu fünf aufeinander folgenden Zeitpunkten t = 1 bis t = 5 dargestellt, wobei als Zeiteinheit wie in Fig. 3 die Länge eines Taktzyklus gewählt wurde. Zum Zeitpunkt t = 1 wertet der Teilnehmer S1 den Header des ersten Datagramms aus, zum Beispiel indem er eine Speicheradresse aus dem im Header enthaltenen Adressfeld liest. Im nachfolgenden Zeitpunkt t = 2 bestimmt der Teilnehmer S1 Eingabedaten in Abhängigkeit vom Inhalt des Headers, während er von dem Zwischenfeld FILL1 durchlaufen wird. In dem gezeigten Beispiel bestimmt der Teilnehmer S1 die Eingabedaten, indem er sie aus einem mit dem Adressfeld ADDR1 bezeichneten Speicherbereich liest. Zum Zeitpunkt t = 3 schreibt der Teilnehmer S1 die ermittelten Eingabedaten in das Eingabefeld DATA1. Die Durchlaufzeit einer jeden Dateneinheit der getakteten Datenfolge durch einen jeden der Teilnehmer S1, S2, S3 ist im Vergleich zu dem Verarbeitungsschema gemäß Fig. 3 erkennbar kürzer, nämlich beträgt sie in diesem Beispiel nur einen Taktzyklus statt der in Fig. 3 erforderlichen zwei Taktzyklen.

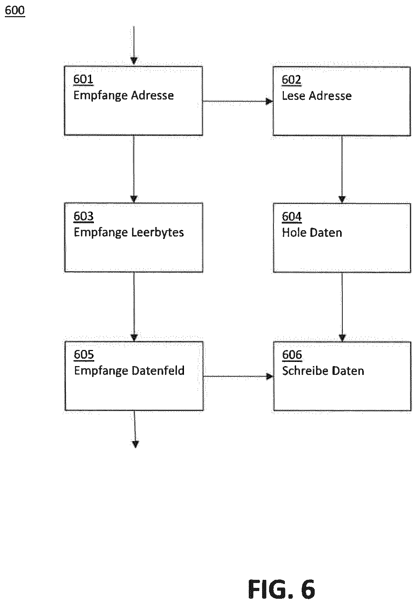

Das Flussdiagramm in Fig. 6 veranschaulicht ein Beispiel eines Verfahrens 600 zur Verarbeitung einer Datenfolge in einem Teilnehmer eines Kommunikationsnetzwerkes. Der Teilnehmer kann zum Beispiel einer der Teilnehmer 12 des mit Bezug auf Fig. 1 beschriebenen Kommunikationsnetzwerkes sein. In dem Verfahren empfängt der Teilnehmer zunächst eine Speicheradresse (Schritt 601), gegebenenfalls zusammen mit einer Angabe der Länge des adressierten Speicherbereichs. Der Teilnehmer liest die empfangene Adresse und gegebenenfalls die weiteren im Schritt 601 empfangenen Informationen (Schritt 602) und holt Daten aus einem mit der Adresse bezeichneten Speicherbereich (Schritt 604). Währenddessen empfängt der Teilnehmer ein Zwischenfeld der Datenfolge (Schritt 603). Das Zwischenfeld kann ein oder mehrere Leerbytes (d.h. Dummybytes) enthalten, die keinen anderen Zweck haben als den, den Empfang eines dem Header nachfolgenden Datenfeldes (Schritt 605) zu verzögern. Damit wird erreicht, dass der Teilnehmer zu dem Zeitpunkt, wo ihm ein Schreibzugriff auf das Datenfeld der Datenfolge möglich ist, den Schritt 604 (Beschaffung der Eingabedaten) bereits abgeschlossen hat, sodass ihm die Eingabedaten dann auch tatsächlich zur Verfügung stehen. Nach Empfang des Datenfeldes (Schritt 605) und Beschaffung der Daten (Schritt 604) schreibt der Teilnehmer die Daten dann in das Datenfeld (Schritt 606).

Alternativ zu einem Auffüllen des Zwischenfeldes mit Leerbytes kann das Zwischenfeld auch genutzt werden, um solche Nutzdaten zu übertragen, die grundsätzlich immer vom Teilnehmer schon bereitgestellt sind bzw. die im Teilnehmer schon vor dem Eintreffen des Schreibdatagramms ausgelesen wurden, z.B. Interrupts und andere Statusinformationen. Das Einlesen von solchen Daten in das Zwischenfeld verletzt nicht das Ziel, die Zeit zum Adressieren des ersten Datenbytes zu verlängern, weil diese Statusinformationen nicht über das Adressfeld ausgewählt, sondern vom Teilnehmer permanent oder vorab bereitgehalten werden. Die zusätzlichen Bytes im Zwischenfeld können auch genutzt werden, um nicht adressierte Daten an die Teilnehmer ähnlich einem Broadcast-Telegramm zu verteilen.

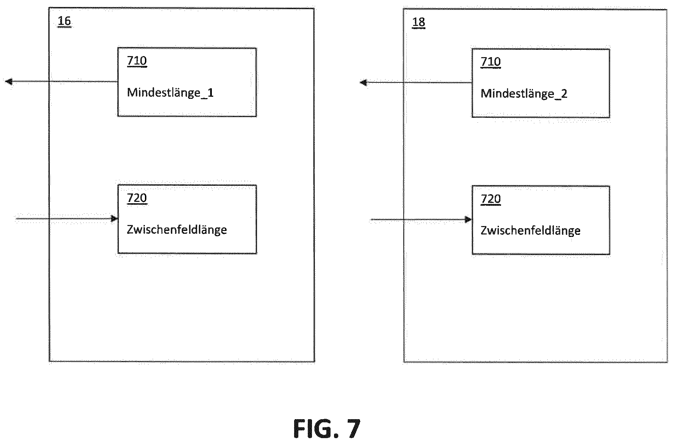

Bei der in Figur 7 skizzierten Ausführungsform besitzt jeder (oder wenigstens einer) der Teilnehmer des Netzwerkes eine erste Speichereinrichtung 710 (z.B. ein erstes Register), in das eine Mindestlänge für das Zwischenfeld eingetragen ist. Die Mindestlänge kann so gewählt sein, dass sie eine minimale Durchlaufzeit in dem betreffenden Teilnehmers erlaubt. Die Mindestlänge kann von der Implementierung des betreffenden Teilnehmers abhängen. Des Weiteren besitzt jeder (oder wenigstens einer) der Teilnehmer eine zweite Speichereinrichtung 720 (z.B. ein zweites Register), in das eine tatsächliche Länge des Zwischenfeldes eingetragen werden kann. Im Betrieb stellt jeder der Teilnehmer seine Durchlaufzeit entsprechend der in der zweiten Speichereinrichtung eingetragenen tatsächlichen Länge des Zwischenfeldes um. Gemäß einer speziellen Ausführungsform wählt der erste Teilnehmer 14 (siehe Figur 1) als zu verwendende Zwischenfeldlänge das Maximum der von den anderen Teilnehmern (z.B. den Teilnehmern 16 und 18) jeweils angezeigten Mindestlängen und trägt die gewählte Zwischenfeldlänge in die jeweiligen zweiten Speichereinrichtungen 720 der Teilnehmer 12 ein.

In dieser Anmeldung wird angenommen, dass die Bitlänge eines Datagramms nicht verändert wird, während das Datagramm den Datenpfad durchläuft. Eine Anpassung der Bitlänge des Datagramms während eines Durchlaufs würde zusätzliche technische Maßnahmen erfordern. Jedes Datagramm hat folglich eine feste Bitlänge. Dies schließt jedoch nicht aus, dass verschiedene Datagramme in einem Telegramm unterschiedliche Bitlängen haben können oder dass ein Datagramm in einem späteren Telegramm eine andere Bitlänge aufweist als ein entsprechendes Datagramm in einem früheren Telegramm.

Eine Dateneinheit ist eine endliche Bitsequenz mit einer festen Länge. Eine Dateneinheit kann z.B. ein Bit, ein Byte (8 Bits), 16 Bit, 32 Bit oder 64 Bit sein. Mehrere Dateneinheiten haben jeweils dieselbe feste Länge.

Die Durchlaufzeit eines Teilnehmers ist die Zeitspanne zwischen dem Empfang eines Bits am Eingang des Teilnehmers und der Ausgabe desselben Bits am Ausgang des Teilnehmers. Das heißt, die Durchlaufzeit des Teilnehmers ist die Laufzeit des Bits vom Eingang zum Ausgang des Teilnehmers.

Die Übertragungsdauer eines Datagramms ist die Zeit, die das Datagramm benötigt, um eine gegebene Stelle des Datenpfades zu passieren. Wenn das Datagramm aus N Bits zusammengesetzt ist (wenn also seine Bitlänge N ist), so beträgt die Übertragungsdauer des Datagramms N * BR, wobei BR die Bitrate ist. Die Bitrate ist die Anzahl von Bits, die pro Zeiteinheit gesendet werden.

## Patentansprüche

1. Verfahren zum Betreiben eines Kommunikationsnetzwerks, mit den folgenden Maßnahmen:
Senden einer getakteten Datenfolge von einem ersten Teilnehmer (14) an einen zweiten Teilnehmer (16) des Kommunikationsnetzwerkes, wobei vom ersten Teilnehmer (14) pro Taktzyklus eine Dateneinheit der Datenfolge gesendet wird und wobei die Datenfolge ein Datagramm (400) als Schreibdatagramm enthält, welches einen Header (420), ein dem Header nachfolgendes Zwischenfeld (430) und ein dem Zwischenfeld nachfolgendes Datenfeld (440) umfasst, wobei der Header, das Zwischenfeld und das Datenfeld jeweils eine oder mehrere Dateneinheiten aufweisen;
Lesen des Headers durch den zweiten Teilnehmer;
Bestimmen von Eingabedaten durch den zweiten Teilnehmer in Abhängigkeit vom Inhalt des Headers innerhalb einer Reaktionszeit des zweiten Teilnehmers; und
Einschreiben der Eingabedaten in das Datagramm durch den zweiten Teilnehmer, während die Datenfolge den zweiten Teilnehmer durchläuft,
wobei die Länge des Zwischenfeldes auf die Taktfrequenz der Datenfolge und die Reaktionszeit des zweiten Teilnehmers abgestimmt ist.

2. Verfahren nach Anspruch 1, wobei ein Eingang und ein Ausgang des zweiten Teilnehmers über ein Schieberegister miteinander verbunden sind, welches mit der Taktfrequenz getaktet und dabei von der Datenfolge durchlaufen wird, wobei die Länge des Schieberegisters und die Länge des Zwischenfeldes aufeinander abgestimmt sind.

3. Verfahren nach einem der vorangehenden Ansprüche, wobei das Zwischenfeld wenigstens ein Leerelement enthält.

4. Verfahren nach einem der vorangehenden Ansprüche, wobei das Zwischenfeld wenigstens eine nicht adressierte Dateneinheit enthält, die von dem zweiten Teilnehmer gelesen wird.

5. Verfahren nach einem der vorangehenden Ansprüche, wobei in das Zwischenfeld von dem zweiten Teilnehmer wenigstens eine Dateneinheit eingelesen wird, die von dem zweiten Teilnehmer vorab oder permanent bereitgehalten ist.

6. Verfahren nach einem der vorangehenden Ansprüche, wobei die Datenfolge mehrere Schreibdatagramme enthält, wobei jedes dieser Schreibdatagramme jeweils einen Header, ein dem Header nachfolgendes Zwischenfeld und ein dem Zwischenfeld nachfolgendes Datenfeld enthält, wobei die Länge des Zwischenfeldes jeweils auf die Taktfrequenz der Datenfolge und auf eine Reaktionszeit wenigstens eines der Teilnehmer abgestimmt sind.

7. Verfahren nach Anspruch 6, wobei die Länge des Zwischenfeldes für jedes der Schreibdatagramme dieselbe ist.

8. Verfahren nach Anspruch 6 oder 7, wobei die Länge des Zwischenfeldes auf die Reaktionszeit des Teilnehmers mit der längsten Reaktionszeit im Kommunikationsnetzwerk abgestimmt ist.

9. Verfahren nach einem der vorangehenden Ansprüche, wobei die Länge des Zwischenfeldes und die Taktfrequenz aufeinander abgestimmt sind.

10. Verfahren nach einem der vorangehenden Ansprüche, wobei der zweite Teilnehmer seine Durchlaufzeit auf der Grundlage der Länge des Zwischenfeldes und der Taktfrequenz einstellt.

11. Verfahren nach einem der vorangehenden Ansprüche, wobei der zweite Teilnehmer dem ersten Teilnehmer die Reaktionszeit des zweiten Teilnehmers anzeigt.

12. Verfahren nach einem der vorangehenden Ansprüche, wobei der erste Teilnehmer dem zweiten Teilnehmer die Länge des Zwischenfeldes anzeigt.

13. Kommunikationsnetzwerk, eingerichtet zur Durchführung eines Verfahrens nach einem der Ansprüche 1 bis 12, welches eine Steuervorrichtung nach Anspruch 14 und eine Datenverarbeitungsvorrichtung nach Anspruch 15 beinhaltet, wobei das Kommunikationsnetzwerk ein Feldbussystem, vorzugsweise ein EtherCAT-Netzwerk ist.

14. Steuervorrichtung (14) zur Verwendung als ein erster Teilnehmer in einem Kommunikationsnetzwerk mit mehreren Teilnehmern,
die dazu eingerichtet ist,
eine getaktete Datenfolge zu erzeugen, wobei pro Taktzyklus eine Dateneinheit der Datenfolge erzeugt wird, wobei die Datenfolge ein Schreibdatagramm enthält, welches einen Header, ein dem Header nachfolgendes Zwischenfeld und ein dem Zwischenfeld nachfolgendes Datenfeld enthält, wobei der Header, das Zwischenfeld und das Datenfeld jeweils eine oder mehrere Dateneinheiten umfassen, und
die getaktete Datenfolge an einem Ausgang zur Übermittlung an einen zweiten Teilnehmer des Kommunikationsnetzwerkes auszugeben,
wobei die Länge des Zwischenfeldes auf die Taktfrequenz der Datenfolge und die Reaktionszeit des zweiten Teilnehmers abgestimmt ist.

15. Datenverarbeitungsvorrichtung (16) zur Verwendung als ein zweiter Teilnehmer in einem Kommunikationsnetzwerk mit mehreren Teilnehmern,
die dazu eingerichtet ist,
eine getaktete Datenfolge zu empfangen, wobei pro Taktzyklus eine Dateneinheit der Datenfolge empfangen wird, wobei die Datenfolge ein Schreibdatagramm enthält, welches einen Header, ein dem Header nachfolgendes Zwischenfeld und ein dem Zwischenfeld nachfolgendes Datenfeld enthält, wobei der Header, das Zwischenfeld und das Datenfeld jeweils eine oder mehrere Dateneinheiten umfassen, wobei die Länge des Zwischenfeldes auf die Taktfrequenz der Datenfolge und einer Reaktionszeit des zweiten Teilnehmers abgestimmt ist,
und während eines Durchlaufs des Schreibdatagramms den Header zu lesen und Eingabedaten in Abhängigkeit vom Inhalt des Headers innerhalb der Reaktionszeit zu bestimmen und die Eingabedaten in das Datenfeld des Datagramms zu schreiben.

## Claims

1. Method for operating a communication network, with the following measures:
transmitting a clocked data sequence from a first participant (14) to a second participant (16) of the communication network, wherein one data unit of the data sequence is transmitted per clock cycle by the first participant (14) and wherein the data sequence contains a datagram (400) as a write datagram which contains a header (420), an intermediate field (430) following the header and a data field (440) following the intermediate header, wherein the header, the intermediate field and the data field in each case have one or more data units;
reading of the header by the second participant;
defining of input data by the second participant depending on the content of the header within a response time of the second participant; and
recording of the input data in the datagram by the second participant while the data sequence passes through the second participant,
wherein the length of the intermediate field is matched to the clock frequency of the data sequence and the response time of the second participant.

2. Method according to Claim 1, wherein an input and an output of the second participant are interconnected via a shift register which is clocked at the clock frequency and is passed through by the data sequence, wherein the length of the shift register and the length of the intermediate field are matched to one another.

3. Method according to any one of the preceding claims, wherein the intermediate field contains at least one empty element.

4. Method according to any one of the preceding claims, wherein the intermediate field contains at least one un-addressed data unit which is read by the second participant.

5. Method according to any one of the preceding claims, wherein at least one data unit which is held ready in advance or permanently by the second participant is read by the second participant into the intermediate field.

6. Method according to any one of the preceding claims, wherein the data sequence contains a plurality of write datagrams, wherein each of these write datagrams in each case contains a header, an intermediate field following the header and a data field following the intermediate field, wherein the length of the intermediate field is matched in each case to the clock frequency of the data sequence and to a response time of at least one of the participants.

7. Method according to Claim 6, wherein the length of the intermediate field is the same for each of the write datagrams.

8. Method according to Claim 6 or 7, wherein the length of the intermediate field is matched to the response time of the participant with the longest response time in the communication network.

9. Method according to any one of the preceding claims, wherein the length of the intermediate field and the clock frequency are matched to one another.

10. Method according to any one of the preceding claims, wherein the second participant sets its transit time on the basis of the length of the intermediate field and the clock frequency.

11. Method according to any one of the preceding claims, wherein the second participant indicates the response time of the second participant to the first participant.

12. Method according to any one of the preceding claims, wherein the first participant indicates the length of the intermediate field to the second participant.

13. Communication network, configured to carry out a method according to any one of Claims 1 to 12, which comprises a controller according to Claim 14 and a data processing device according to Claim 15, wherein the communication network is a fieldbus system, preferably an EtherCAT network.

14. Controller (14) for use as a first participant in a communication network with a plurality of participants, which is configured
to generate a clocked data sequence, wherein one data unit of the data sequence is generated per clock cycle, wherein the data sequence contains a write datagram which contains a header, an intermediate field following the header and a data field following the intermediate field, wherein the header, the intermediate field and the data field in each case comprise one or more data units, and the clocked data sequence is output at an output for forwarding to a second participant of the communication network,
wherein the length of the intermediate field is matched to the clock frequency of the data sequence and the response time of the second participant.

15. Data processing device (16) for use as a second participant in a communication network with a plurality of participants,
which is configured
to receive a clocked data sequence, wherein one data unit of the data sequence is received per clock cycle, wherein the data sequence contains a write datagram which contains a header, an intermediate field following the header and a data field following the intermediate field, wherein the header, the intermediate field and the data field in each case comprise one or more data units, wherein the length of the intermediate field is matched to the clock frequency of the data sequence and a response time of the second participant,
and to read the header during a pass of the write datagram and to define input data depending on the content of the header within the response time and to write the input data to the data field of the datagram.

## Revendications

1. Procédé d'exploitation d'un réseau de communication, comprenant les opérations suivantes :
envoi d'une séquence de données synchronisées d'un premier utilisateur (14) à un deuxième utilisateur (16) du réseau de communication, une unité de données de la séquence de données étant transmise par le premier utilisateur (14) à chaque cycle d'horloge et la séquence de données contenant un datagramme (400), servant de datagramme d'écriture, qui comprend un en-tête (420), une zone intermédiaire (430) en aval de l'en-tête et une zone de données (440) en aval de la zone intermédiaire, l'en-tête, la zone intermédiaire et la zone de données comportant chacun au moins une unité de données ;
lecture de l'en-tête par le deuxième utilisateur ;
détermination de données d'entrée par le deuxième utilisateur en fonction du contenu de l'en-tête dans un délai de réponse du deuxième utilisateur ; et
écriture des données d'entrée dans le datagramme par le deuxième utilisateur pendant que la séquence de données passe par le deuxième utilisateur,
la longueur de la zone intermédiaire étant réglée sur la fréquence d'horloge de la séquence de données et le temps de réaction du deuxième utilisateur.

2. Procédé selon la revendication 1,
une entrée et une sortie du deuxième utilisateur étant reliées l'une à l'autre par le biais d'un registre à décalage qui est cadencé à la fréquence d'horloge et est ainsi traversé par la séquence de données, la longueur du registre à décalage et la longueur de la zone intermédiaire étant adaptées l'une à l'autre.

3. Procédé selon l'une des revendications précédentes, la zone intermédiaire contenant au moins un élément vide.

4. Procédé selon l'une des revendications précédentes, la zone intermédiaire contenant au moins une unité de données sans adresse lue par le deuxième utilisateur.

5. Procédé selon l'une des revendications précédentes, au moins une unité de données, qui est conservée par le deuxième utilisateur de manière provisoire ou permanente, étant lue dans la zone intermédiaire du deuxième utilisateur.

6. Procédé selon l'une des revendications précédentes, la séquence de données contenant plusieurs datagrammes d'écriture, chacun de ces datagrammes d'écriture contenant un en-tête, une zone intermédiaire en aval de l'en-tête et une zone de données en aval de la zone intermédiaire, la longueur de la zone intermédiaire étant réglée sur la fréquence d'horloge de la séquence de données et sur un temps de réaction d'au moins un des utilisateurs.

7. Procédé selon la revendication 6, la longueur de la zone intermédiaire étant la même pour chacun des datagrammes d'écriture.

8. Procédé selon la revendication 6 ou 7, la longueur de la zone intermédiaire étant réglée sur le temps de réaction de l'utilisateur avec le temps de réaction le plus long dans le réseau de communication.

9. Procédé selon l'une des revendications précédentes, la longueur de la zone intermédiaire et la fréquence d'horloge étant adaptées l'une à l'autre.

10. Procédé selon l'une des revendications précédentes, le deuxième utilisateur réglant son temps de cycle en fonction de la longueur de la zone intermédiaire et de la fréquence d'horloge.

11. Procédé selon l'une des revendications précédentes, le deuxième utilisateur indiquant au premier utilisateur le temps de réaction du deuxième utilisateur.

12. Procédé selon l'une des revendications précédentes, le premier utilisateur indiquant au deuxième utilisateur la longueur de la zone intermédiaire.

13. Réseau de communication configuré pour mettre en oeuvre un procédé selon l'une des revendications 1 à 12, lequel réseau de communication comprend un dispositif de commande selon la revendication 14 et un dispositif de traitement de données selon la revendication 15, le réseau de communication étant un système de bus de terrain, de préférence un réseau EtherCAT.

14. Dispositif de commande (14) destiné à être utilisé comme premier utilisateur dans un réseau de communication comportant plusieurs utilisateurs,
lequel dispositif de commande est configuré pour générer une séquence de données synchronisée, une unité de données de la séquence de données étant générée à chaque cycle d'horloge, la séquence de données contenant un datagramme d'écriture qui contient un en-tête, une zone intermédiaire en aval de l'en-tête et une zone de données en aval de la zone intermédiaire, l'en-tête, la zone intermédiaire et la zone de données comprenant chacun au moins une unité de données, et
délivrer la séquence de données synchronisée à une sortie pour la transmettre à un deuxième utilisateur du réseau de communication,
la longueur de la zone intermédiaire étant réglée sur la fréquence d'horloge de la séquence de données et le temps de réaction du deuxième utilisateur.

15. Dispositif de traitement de données (16) destiné à être utilisé comme deuxième utilisateur dans un réseau de communication comportant plusieurs utilisateurs,
lequel dispositif de traitement de données est configuré pour
recevoir une séquence de données synchronisée, une unité de données de la séquence de données étant reçue à chaque cycle d'horloge, la séquence de données contenant un datagramme d'écriture qui contient un en-tête, une zone intermédiaire en aval de l'en-tête et une zone de données en aval de la zone intermédiaire, l'en-tête, la zone intermédiaire et la zone de données comprenant chacun au moins une unité de données, la longueur de la zone intermédiaire étant réglée sur la fréquence d'horloge de la séquence de données et un temps de réponse du deuxième utilisateur,
et, pendant l'exécution du datagramme d'écriture, lire l'en-tête et déterminer les données d'entrée en fonction du contenu de l'en-tête pendant le temps de réaction et écrire les données d'entrée dans la zone de données du datagramme.
